# EUROPEAN PATENT APPLICATION

(11) **EP 4 292 866 A1**
(43) Date of publication of application: **20.12.2023**
(21) Application number: 23178929.8
(22) Date of filing: 13.06.2023
(51) Int. Cl.: B60L 53/16, B60L 53/30

(54) **VEHICLE POWER ADAPTOR**

(30) Priority: 14.06.2022 SE 2250709
(71) Applicant: Solér, Ola, 217 47 Malmö (SE)
(72) Inventor: Solér, Ola, 217 47 Malmö (SE)
(74) Representative: Ström & Gulliksson AB

(57) **Abstract**

A vehicle power adaptor (100) is presented. The vehicle power adaptor (100) comprises a first interface (110) configured for connection to an electrical road track (10) and a second interface (120) configured for connection to a charging port (22) of a parked vehicle (20). The first interface (110) is electrically connected to the second interface (120). The vehicle power adaptor (100) is configured to, when in use, transfer power (P) between the electrical road track (10) and the vehicle (20). An associated method and system are also presented.

## Description

### TECHNICAL FIELD

The present invention relates to a vehicle adaptor and more precisely to a power adaptor for use with an electrical road track.

### BACKGROUND

The evolution of vehicles being driven wholly or partly by electrical power is constantly increasing. Many of these electrical vehicles (EVs) are configured with a battery that may be charged from external power sources. In order to facilitate charging, vehicle charges have to be readily available to charge the EVs. At private residences, it is commonplace to install private chargers permitting a safe and controlled charging of the EV when parked at home. Larger parking facilities such as parking houses or outdoor parking lots may be provided with vehicle chargers allowing EVs to be charged whilst parked at the parking facility. Many gas stations and restaurants offer vehicle chargers and there are even solutions for charging EVs from external power sources while driving.

However, in densely populated areas such as city centers, parking lots and parking houses are scarce and many times very expensive. In such areas, vehicles are generally parked in the street along sidewalks. If vehicles charges were to be installed for vehicles parked in the streets, it would significantly impact the urban environment introducing obstacles on the sidewalks making them more difficult to navigate for persons suffering from disabilities such as motoric disabilities or visibility impairments. In addition to this, installation is a costly process requiring excavation of the sidewalks in order to install required cabling etc.

### SUMMARY

An object of the present invention is to provide a new type of vehicle power adaptor which is improved over prior art and which eliminates or at least mitigates the drawbacks discussed above. More specifically, an object of the invention is to provide a vehicle power adaptor that may be connected to electrical road tracks. These objects are achieved by the technique set forth in the appended independent claims with preferred embodiments defined in the dependent claims related thereto.

In a first aspect, a vehicle power adaptor is presented. The vehicle power adaptor comprises a first interface configured for connection to an electrical road track and a second interface configured for connection to a charging port of a parked vehicle. The first interface is electrically connected to the second interface. The vehicle power adaptor is configured to, when in use, transfer power between the electrical road track and the vehicle.

In one variant, the vehicle power adaptor further comprises a control module arranged between the first interface and the second interface, and configured to control the transfer of power between the first interface and the second interface. The control module is beneficial as it allows for at least some of the control and monitoring required in transfer of power to and from a vehicle to be handled by the vehicle power adaptor.

In one variant, the control module is configured to obtain a road track identification key associated with the electrical road track. This is beneficial as it provides knowledge to the vehicle power adaptor of which vehicle power adapter it is connected to and enables specific actions, controls and configurations based on this.

In one variant, the vehicle power adaptor further comprises a user identification key associated with a user of the vehicle power adaptor. This is beneficial as it provides knowledge to the vehicle power adaptor of which user is utilizing the vehicle power adaptor and enables specific actions, controls and configurations based on this.

In one variant, the vehicle power adaptor further comprises a power source configured to power the first interface, the second interface and/or the control module. This is beneficial as the vehicle power adaptor, or any active components of the vehicle power adaptor, is not required to receive power from the vehicle or the vehicle road track during e.g. activation of the vehicle power adaptor.

In one variant, the power source is configured to, when the vehicle power adaptor is used, receive power from the electrical road track and/or the vehicle. This is beneficial as a rechargeable power source may be utilized reducing cost of usage and environmental impact.

In one variant, the first interface further comprises an attachments means configured to retain the first interface on the electrical road track. This is beneficial as it reduced a risk that the first interface is involuntarily moved during use.

In one variant, the first interface further comprises a lock configured to lock the attachments means in engagement with the electrical road track. This is beneficial as it reduces a risk that the vehicle power adaptor is stolen.

In one variant, the vehicle power adaptor further comprises a heating element configured to heat the first interface. This is beneficial as it reduces a risk of buildup of ice and allows the vehicle power adapter to be used with electrical road tracks without having to first remove e.g. snow and/or ice from the electrical road track.

In one variant, the first interface comprises a first power interface configured for transfer of power between the vehicle power adaptor and the electrical road track, and a first data interface configured for transfer of data between the vehicle power adaptor and the electrical road track. This is beneficial as it allows for the transfer of data between the vehicle power adapter and the electrical road track. Such data may be e.g. control data, measurement data, status indicators etc.

In one variant, the first interface comprises a galvanic connection for transfer of power between the vehicle power adaptor and the electrical road track. This is beneficial as a galvanic connection is simple and cheap to implement and can handle comparably high currents.

In one variant, the first interface comprises an inductive connection and/or a capacitive connection for transfer of power between the vehicle power adaptor and the electrical road track. This is beneficial as the transfer of power may be provided without physical contact between the power terminals reducing a risk of electrical chock of the user and bystanders. It also allows the electrical power terminals of the electrical road track to be covered further reducing the risk of electrical chock.

In one variant, the vehicle power adaptor is configured to unidirectionally transfer power from the electrical road track to the vehicle. This is beneficial as it provides a simple design focused substantially solely on charging the vehicle.

In a second aspect, a method of transferring power between a vehicle and an electrical road track is presented. The method comprises obtaining a vehicle power adaptor according to the first aspect and connecting the first interface of the vehicle power adaptor to the electrical road track and the second interface of the vehicle power adaptor to a charging port of the vehicle. The method further comprises activating the electrical road track and transferring power between the vehicle and the electrical road track.

In one variant, activating the electrical road track further comprises obtaining a road track identification key associated with the electrical road track and a user identification key associated with the vehicle power adaptor, and activating the electrical road track is based in the road track identification key and the user identification key. This is beneficial as it enables a safe and secure process for activating the electrical road track only when an authorized user is connected to it. It also provides mean for e.g. billing.

In one variant, activating the electrical road track further comprises obtaining electricity metrics, and activating the electrical road track is based on the electricity metrics, wherein the electricity metrics comprises one or more of an electricity pricing metric, an energy availability metric, an energy consumption metric, a state of charge of the vehicle or a time of day. This is beneficial as it allows control of the vehicle power adaptor based on the electricity metrics.

In one variant, the transferring of power is either from the electrical road track to the vehicle or from the vehicle to the electrical road track based on the electricity metrics.

In a third aspect, a vehicle charging system is presented. The system comprises a vehicle power adaptor according to the first aspect, an electrical road track and a system controller operatively connected to the vehicle power adaptor and the electrical road track. The system controller is configured to cause activation of the electrical road track, and transfer of power between the vehicle and the electrical road track.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic view of a vehicle being charged by an electrical road track according to the prior art;
Fig. 2 is a vehicle power adaptor according to some embodiments of the present disclosure;
Fig. 3 is a vehicle power adaptor in use according to some embodiments of the present disclosure;
Figs. 4a-d are views of second interfaces according to some embodiments of the present disclosure;
Fig. 5 is a cross sectional view of a first interface in use according to some embodiments of the present disclosure;
Fig. 6 is a schematic view of a first interface according to some embodiments of the present disclosure;
Fig. 7 is a schematic view of an electrical road track according to some embodiments of the present disclosure;
Fig. 8 is a schematic view of a second interface according to some embodiments of the present disclosure;
Fig. 9 is a schematic view of a vehicle power adaptor according to some embodiments of the present disclosure;
Fig. 10 is schematic view of a vehicle charging system according to some embodiments of the present disclosure;
Fig. 11 is a block diagram of a method for transferring power between a vehicle and an electrical road track according to some embodiments of the present disclosure; and
Fig. 12 is a block diagram of methods for activating an electrical road track according to some embodiments of the present disclosure.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method that "comprises," "has," "includes" or "contains" one or more steps possesses those one or more steps, but is not limited to possessing only those one or more steps.

Generally, throughout the present disclosure, the use of the word "electrical" is implying something that is related to electricity, e.g. an electrical road track. The word "electric" is used to describe devices that run on electricity, e.g. an electric vehicle. However, the words may in many embodiments and context be used interchangeable e.g. an electric vehicle may be described as an electrical vehicle. It should be mentioned that the present disclosure relates to power transfer in electrical vehicles and any reference to a vehicle (unless clear from context that something else is implied) is to a vehicle comprising some form of energy storage means (battery, fuel cell etc.) capable of receiving energy from external sources i.e. being charged from external sources, not only regenerative charging.

As mentioned, there are systems available for charging an electric vehicle (EV) whilst driving. In the broad term, electric road, eroad, or electric road system (ERS) have been commercially available for quite some time and may said to comprise any road which supplies electric power to vehicles travelling on it. Overhead power lines are commonly used in cities to power e.g. electric buses or other commercial vehicles. Overhead power lines are generally not available to private vehicles but dedicated to commercial vehicles. However, ground-level power supply may be made available to any vehicle through conductive rails or inductive coils embedded in or arranged on a road.

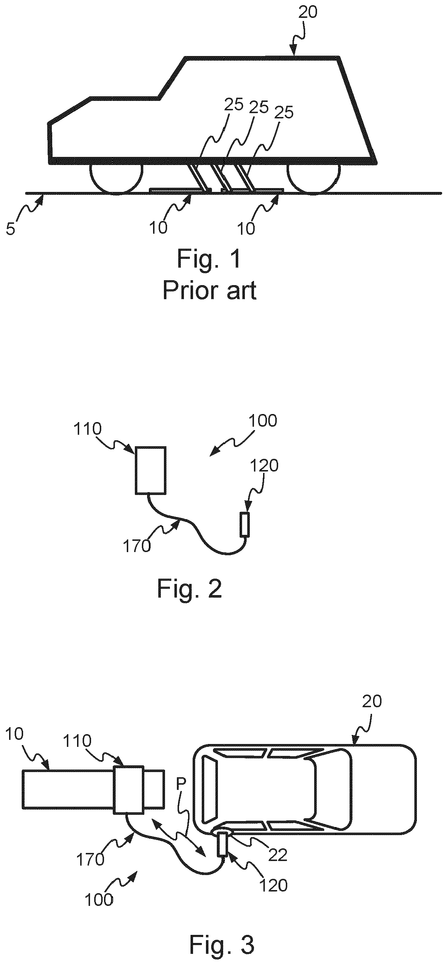

In Fig. 1, a commercially available system for ground-level power supply is presented. The ground-level power supply system comprises a plurality of electrical road tracks 10 that are arranged on a road 5. The electrical road tracks 10 may be arranged flush with the road 5, embedded into the road 5, hidden in the road 5, arranged on the road 5 or in any combination thereof. The arrangement of the electrical road tracks 10 may depend on the how a vehicle 20 connects to the electrical road tracks 10. In the embodiment of Fig. 1, the vehicle 20 is provided with a plurality of power collectors 25 configured to extend below the vehicle and contact electrical road tracks 10 underneath the vehicle 20. This allows the vehicle 20 to be powered (charged) from the electrical road tracks 10 while traveling. The power collectors 25 may be configured to form a galvanic connection to the electrical road tracks 10, a capacitive connection to the electrical road tracks 10 or an inductive connection to the electrical road tracks 10, depending on configuration of the electrical road track 10 and the vehicle 20. Exemplary, non-limiting embodiment of power collectors 25 are disclosed in WO2021245016A1 which is hereby incorporated by reference.

The electrical road tracks 10 may be formed as one elongated member covering long sections of a road such that more than one vehicle 20 contact the same electrical road track 10 at the same time. Alternatively, and as illustrated in Fig. 1, the electrical road track 10 is shorter than the vehicle 20 such that the vehicle covers an electrical road track 10 currently providing power to the vehicle 20. In such arrangements, the eroad may be configured to only power electrical road tracks 10 currently in electrical contact with a vehicle 20. This arrangement is especially beneficial when utilizing a galvanic connection between the electrical road track 10 and the power collectors 25 of the vehicle 20 as it reduces a risk of electrical shock in people and/or animals since electrical road tracks 10 currently not connected to a vehicle 20 may be powered off. The individual activation of electrical road tracks 10 is known in the art from e.g. WO2017167727A1 which is hereby incorporated by reference. The individually activated electrical road tracks 10 are generally longitudinally spaced apart which means that a gap may be formed between the electrical road tracks 10. In order to ensure a consistent transfer of power from the electrical road tracks 10 to the vehicle, it is commonplace to provide the vehicle 20 with more than one power collector 25 longitudinally spaced apart at a distance being larger than the gap between the electrical road tracks 10.

The electrical road tracks 10 provide a cost effective means of providing power to vehicles 20 while moving, and if installed by e.g. traffic lights, they may transfer power also to stationary vehicles. However, the power collectors 25 are complex contraptions and installations of power collectors 25 on a vehicle 20 require significant resources and is a costly process.

The inventor behind the present disclosure have realized, in view of the problem with charging parked vehicles 20 in urban environments and the presence of eroads, that electrical road tracks 10 may be utilized to charge any vehicle 20, not just vehicles provided with power collectors 25. To this end, a vehicle power adaptor 100 as the one presented in Fig. 2 may be utilized. The vehicle power adaptor 100 comprises a first interface 110 configured for connection to an electrical road track 10. The electrical road track 10 may be any suitable electrical road track for electrical vehicles 20. The vehicle power adaptor 100 further comprises a second interface 120 configured for connection to a charging port 22, see Fig. 3, of a vehicle 20. The first interface 110 and the second interface 120 may be rigidly attached to each other, but are preferably connected by an intermediate interface 170. The intermediate interface 170 may comprise a plurality of electrical cables arranged to provide an electrical connection between the first interface 110 and the second interface 120. The intermediate interface may comprise optical, pneumatic, wireless or other connections between the first interface 110 and the second interface 120.

With reference to Fig. 3, the vehicle power adaptor 100 is shown in use for transferring power P between the electrical road track 10 and the vehicle 20. The first interface 110 is connected to the electrical road track 10 and the second interface is connected to the charging port 22 of the vehicle 20.

By means of the vehicle power adaptor 100, any vehicle 20 may be connected to an electrical road track 10 without having to install power collectors 25 on the vehicle. The electrical road tracks 10 may be integrated in, or installed on, the surface of any parking space or sidewalk without significantly reducing the accessibility of the sidewalk. Also, the installation is simplified as the electrical road tracks 10 may be connected in series which means that only one mains (main power grid) connection is required for providing power for a series of parking spaces. If vehicle chargers in the form of e.g. charging posts where to be installed, these would be placed next to the parking space and require (buried) cabling running between the charging posts significantly increasing the installation cost, installation time and also the cost of maintenance.

In addition this, the vehicle power adaptor 100 effectively enables implementation of transferring power from a vehicle 20 to the main power, i.e. vehicle to grid power transfer. This may effectively be utilized to reduce power load on the main network during hours with high power consumption and vehicles 20 may be used as an effective energy storage means at times where there is an excess of energy produced.

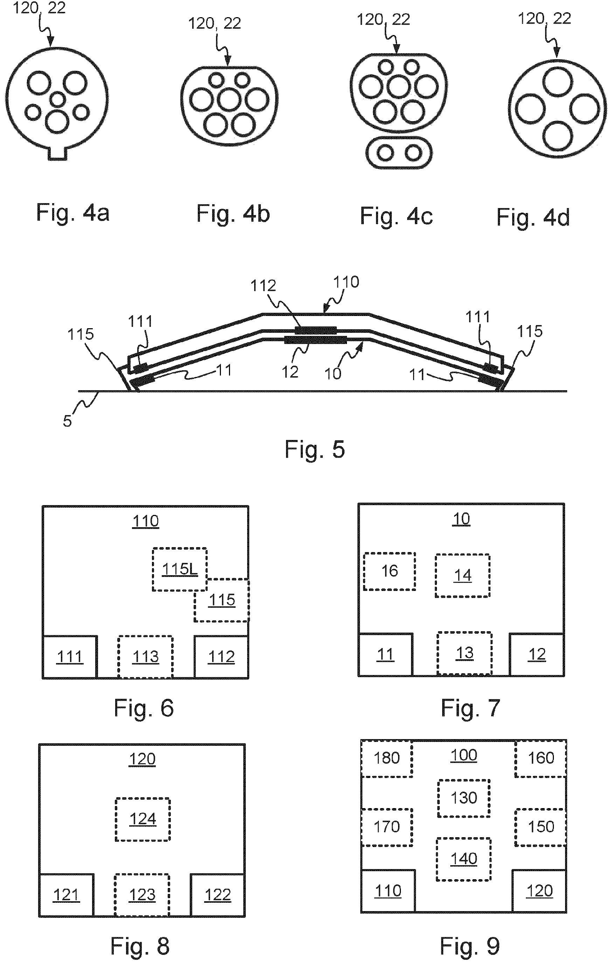

As previously stated, the second interface 120 is configured (adapted) for connection to the charging port 22 of a vehicle 20. The charging ports 22 of electrical vehicles 20 may differ and with reference to Figs. 4a-d four non-limiting embodiments of the second interface 120 will be shown. In Fig. 4a, a second interface 120 according to a North American standard for electrical connectors is illustrated. The second interface of Fig. 4a may be referred to as SAE J1772, IEC 62196 Type 1, or a J plug. In Fig. 4b, a second interface 120 (mainly) used in Europe is illustrated. The second interface of Fig. 4b is known as IEC 62196 Type 2 or mennekes. In Fig. 4c, a second interface 120 called a combined charging system (CCS) is shown. The CCS is an extension of the 62196 Type 1 and Type 2 interfaces shown in Fig. 4a and b respectively. In Fig. 4d, a second interface (mainly) used in Japan is shown. The second interface of Fig. 4d is commonly known as CHAdeMO.

For all second interfaces 120 of Figs. 4a-d, a charging port 22 of opposite gender is provided on the vehicle 20. The presented second interfaces 120 may be configured differently with regards to e.g. maximum power, control architecture or other technical features. However, after digesting the teachings of the present disclosure, the skilled person will be able to implement a vehicle power adaptor 100 utilizing any suitable second interface 120 for connection to the charging port 22 of a vehicle 20. In fact, in some embodiments, the vehicle power adaptor 100 may comprise more than one second interface 120 such that a user may choose the second interface that fits a charging port 22 of her vehicle 20. Additionally, or alternatively, the second interface 120 may be removably connected to the first interface 110 such that a second interface 120 connected to a first interface may be (without use of tools) exchanged for a different second interface 120.

With reference to Fig. 5, one embodiment of the first interface 110 will be explained. Analogously to the second interface 120 being configured to mate with a charging connector 22 of a vehicle 20, the first interface 10 is configured to mate with an electrical road track 10. There are several different kinds of electrical road tracks 10 and the first interface 110 of Fig. 5 is configured to mate with one specific exemplary electrical road track 10. The electrical road track 10 of Fig. 5 comprises two first track power terminals 11 and one second track power terminal 12. The number of track power terminals 11, 12 may differ, and in some (not preferred) embodiments, only one track power terminal 11, 12 is comprised in the electrical road track 10 and the other track power terminal 11, 12 is provided by e.g. the road 5. The first interface 110 is provided with at least one first interface power terminal 111 configured to (galvanically, physically, inductively, capacitvely) connect to the associated first track power terminal 11 of the electrical road track 10. The first interface 110 is further provided with at least one second interface power terminal 112 configured to (galvanically, physically, inductively, capacitvely) connect to the associated second track power terminal 12 of the electrical road track 10. The power terminals 111, 112 of the first interface 110 may be referred to as a first power interface 111, 112. The electrical road track 10 and the first interface 110 as illustrated in Fig. 5 are based on a galvanic connection for transferring power between the first interface 110 and the electrical road track 10. Consequently, the connection between the power terminals 111, 11, 12, 112 is galvanic, i.e. they are in physical contact although shown as slightly distanced for illustrative purposes in Fig. 5.

In order to ensure that the first interface 110 is securely attached to the electrical road track 10, the first interface 110 may optionally be provided with one or more attachment means 115. The attachment means 115 are configured to releasable retain the first interface 110 electrical contact with the electrical road track 10. The attachment means 115 are consequently adapted to mate with the electrical road track 10 and are configured based on a design of the electrical road track 10.

The attachment means 115 of Fig. 5 are configured to engage a particular embodiment of the electrical road track 10 where the electrical road track 10 is installed on top of the road 5 providing a gap between long edges of the electrical road track 10 and the road 5. The attachment means 115 of the first interface 110 of Fig. 5 are configured to be inserted into the gap between the long edges of the electrical road track 10 and the road 5 and thereby retain the first interface 110 on the electrical road track 10. The attachment means 115 may be biased into the gap by a resilient member (not shown) and released by further tensioning the resilient member. In some embodiments, the first interface comprises one or more tension screws (not shown) arranged to urge the attachment means 115 into the gap between the long edges of the electrical road track 10 and the road 5.

In the embodiment of the electrical road track 10 of Fig. 5, the track power terminals 11, 12 are arranged at the long edges of the electrical road track 10. In such embodiments, it may be beneficial to arrange the power terminals 111, 112 of the first interface 110 on the attachment means 115. In some embodiments, the power terminals 111, 112 of the first interface 110 are the attachment means 115.

With reference to the schematic view of the first interface 110 shown in Fig. 6, some additional optional features of the first interface will be explained. In some embodiments, the first interface 110 may comprise a lock 115L configured to lock the attachments means 115 at a positon at which the first interface 110 is mechanically connected to the electrical road track 10. The lock 115L may be a lock requiring a key or a digital pin-code for unlocking, and optionally locking, the lock 115L. In other words, the lock 115L is configured to lock the attachments means 115 in engagement with the electrical road track 10. This is beneficial as it reduces a risk that the vehicle power adapter 100 is stolen when used.

The attachment means 115 illustrated in Fig. 5 is a mechanical attachment means 115. In some embodiments (not shown), the attachment means 115 is an electrical, or electromechanical attachment means 115. In some embodiments, the attachment means 115 comprises one or more electromagnets and/or permanent magnets configured to interact with magnetic portions of the electrical road track 10. Using magnets is a convenient and user friendly solution to ensuring that the first interface 110 is correctly arranged on the electrical road track 10.

In some embodiment the first interface comprises a first data interface 113. The first data interface 113 is configured to transfer data between the vehicle power adaptor 100 and the electrical road track 10. The first data interface 113 may be formed using galvanic connection but is preferably a wireless interface. In some embodiments, the first data interface 113 is an inductive or a capacitive interface. In some embodiments, the first data interface 113 is wireless interface in the form of a radio frequency (RF) interface, preferably utilizing an Industrial, Scientific and Medical (ISM) frequency band, and more preferably configured for short range device (SRD) communication such as Bluetooth^{™} etc.

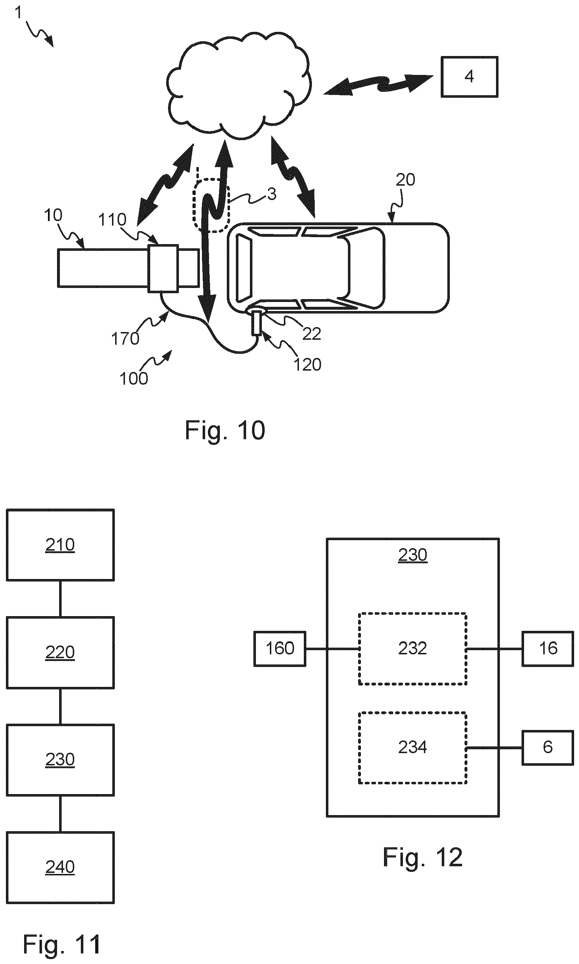

With reference to the schematic view of the electrical road track 10 of Fig. 7, some optional features of the electrical road track 10 will be explained. The electrical road track 10 may in some embodiments comprise a road track data interface 13. The road track data interface 13 may any suitable data interface configured to transfer data between the electrical road track 10 and one or more of a vehicle 20, a vehicle power adaptor 100, a vehicle charging system 1 (see Fig. 10) etc. The road track data interface 13 may comprise more than one means of communication data, such as a cellular wireless interface for communicating with the vehicle charging system 1 and an ISM based SRD interface for communicating with vehicles 20 and/or vehicle power adaptors 100. The road track data interface 13 preferably comprise an interface compatible with the first data interface 113 of the first interface 110 of the vehicle power adaptor 100.

In some embodiments, the electrical road track 10 comprises a road track identification key 16. The road track identification key 16 may be a unique identifier associated with the electrical road track 10. The road track identification key 16 may be transferrable across the road track data interface 13 and/or accessible through other means such as RFID.

The electrical road track 10 may, in some embodiments, comprise a road track control module 14. The road track control module 14 may be configured to control and/or monitor power P transferred between the electrical road track 10 and the vehicle power adaptor 100. Additionally, or alternatively, the road track control module 14 may be configured to control and/or monitor data communicated across the road track data interface 13 between the electrical road track 10 and e.g. a vehicle 20, a vehicle power adaptor 100, a vehicle charging system 1 etc.

With reference to the schematic view of the second interface 120 shown in Fig. 8, some features of the second interface 120 will be explained. The second interface 120 comprises a first interface power port 121 and a second interface power port 122 for transfer of power P between a vehicle 20 and the second interface 120. The interface ports 121, 122 may comprise more than one physical port such that current may be divided between more than one port. The second interface 120 may further comprise a second data interface 123 configured for transfer of data between a vehicle 20 and the second interface 120. Further details and specification on how the ports 121, 122 and second data interface 123 of the second interface are configured is readily available in e.g. reference to the standards as mentioned in reference to Figs. 4a to d. In some embodiments, the second interface 120 comprise a second control module 124. The second control module 124 may be configured to control and/or monitor the transfer of data and/or power between the second interface 120 and a vehicle 20.

In Fig. 9, a schematic view of a vehicle power adaptor 100 is shown. The vehicle power adaptor 100 comprise a first interface 110 and a second interface according to any embodiment or example given in the present disclosure. The vehicle power adaptor 100 may in some embodiments comprise a control module 140. The control module 140 may be configured to control and/or monitor the transfer of power P between the first interface 110 and the second interface 120. Additionally, or alternatively, the control module 140 may be configured to control and/or monitor data communicated across the first data interface 113 between the electrical road track 10 and the vehicle power adaptor 100. Additionally, or alternatively, the control module 140 may be configured to control and/or monitor data communicated across the second data interface 123 between a vehicle 20 and the vehicle power adaptor 100. In some embodiments, wherein the second interface 120 comprise the second controller 124, the control module 140 may be configured to communicate/monitor the vehicle 20 via the second control module 124. In some further embodiments, the second control module 124 act as a modem relaying information between a vehicle 20 and the control module 140. In some embodiments, the second control module 124 and the control module 140 are the same module.

The vehicle power adaptor 100 may in some embodiments comprise a power source 150. The power source 150 may be configured to power the first interface 110 and/or the second interface 120 at least at times when no external power is provided either from a vehicle 20 or an electrical road track 10. Additionally and/or alternatively the power source 150 may be configured to power the control module 140 at least at times when no external power is provided either from a vehicle 20 or an electrical road track 10. The power source 150 may be any suitable power source 150 such as a battery, preferably the power source 150 comprises a rechargeable battery and is configured to charge the battery from one or both of the vehicle 20 or the electrical road track 10 when the vehicle power adaptor 100 is in use. In some embodiments, the rechargeable battery may be charged from a mains socket when the vehicle power adaptor 100 is not in use.

The vehicle power adaptor 100 may, in some embodiments, comprise a control interface 130. The control interface 130 is preferably a wireless interface and usable to control and/or monitor power transfer, status, operation mode etc. of the vehicle power adaptor 100. The control interface 130 may be used in addition to, or instead of, the first data interface 113 and/or the second data interface 123 when communicating with a vehicle 20 and/or an electrical road track 10. The control interface 130 is, in some embodiments, an interface configured for communication between the vehicle power adaptor 100 and a user equipment (UE) 3, see Fig. 10. The communication between the control interface 130 and the UE 3 is preferably by means of a short range communications protocol such as Bluetooth. Additionally, or alternatively, the control interface 130 is a long range interface such as a cellular interface allowing the vehicle power adaptor 100 to connect directly to e.g. a vehicle charging system 1.

The vehicle power adaptor 100 may in some embodiments be associated with a user identification key 160. The user identification key 160 may be any suitable identifier. In some embodiments, the user identification key 160 is tied to the vehicle power adaptor 100. In some embodiments, the user identification key 160 is a configurable key, configurable via e.g. the control interface 130, via the first interface 110 and/or the second interface. Preferably, the user identification key 160 is associated with a user of the vehicle power adapter 100 and may be linked to the user via the vehicle 20 and/or the UE 3.

In some embodiments, the vehicle power adaptor 100 comprises a heating element 180. The heating element 180 may be configured to heat the first interface 110 and/or the second interface 120. In particular for the first interface 110, this reduces a risk that there is a buildup of ice between the electrical road track 10 and the first interface 110 which may make it difficult to remove the first interface 110 when the transfer of power is complete. Also, during winter, there may be snow or ice on the vehicle road track 10 making it difficult to ensure a (galvanic) connection between the first interface 110 and the vehicle road track 10. In such cases, the heating element 180 may heat the first interface 110 effectively melting any snow and/or ice on the electrical road track 10. The heating element 180 may be powered from the power source 150 (if present) of the vehicle power adaptor 100 and/or from the vehicle 20. The heating element 180 may be arranged in, i.e. comprised in, the first interface 110.

With reference to Fig. 10, a vehicle charging system 1 will be presented. The vehicle charging system 1 comprises the vehicle power adaptor 100 according to any example or embodiment of the present disclosure. In addition to this, the vehicle charging system 1 comprises a system controller 4 and the electrical road track 10 according to any example or embodiment of the present disclosure. The system controller 4 is operatively connected to the vehicle power adaptor 100 and the electrical road track 10. That is to say, in some embodiments, a vehicle 20 connected to the second interface 120 of the vehicle power adaptor 100 is connected to the system controller 4 and the vehicle power adaptor 100 is configured to communicate with the system controller 4 via the vehicle 20. Additionally, or alternatively, the vehicle power adaptor 100 may be configured to communicate with the system controller 4 via the electrical road track 10. Additionally, or alternatively, the vehicle power adaptor 100 may be configured to connect to the system controller 4 directly and/or via a UE 3.

In order to avoid having electrical road tracks 10 powered at all times, it may be beneficial to only activate the electrical road tracks 10 when power collectors 25 of vehicle 20 or a first interface 110 is engaging the electrical road track 10. Methods and devices for activating a single electrical road track 10 when engaged by power collectors 25 are known in the art, and in some embodiments, the vehicle power adaptor 100 may be configured to mimic the behavior implemented by the vehicle 20 and the power collector 25. In some embodiments, the road track identification key 16 and the user identification keys 160 associated are (remotely) paired to activate the electrical road track 10. This is beneficial as this allows association between a user and the power transferred between the electrical road track 10 and the vehicle 20 for billing (charging) and/or crediting (vehicle to grid).

The electrical road track 10 is generally controlled by the system controller 4 of the vehicle charging system 1. It should be mentioned that the system controller 4 is not necessarily a cloud connected system controller 4 as shown in Fig. 10, but may be a local system controller 4 configured to control one or more electrical road tracks 10. The system controller 4 may cause activation of power transfer of an electrical road track 10 based on information provided by the electrical road track 10. Such information may comprise an indication that a first interface 110 is connected to the electrical road track 10 and/or identification keys 16, 160 of the electrical road track 10 and/or the vehicle power adaptor 100. The system controller 4 may be configured to process the information obtained prior to activation of the electrical road track 10. Such processing may comprise ensuring status of the electrical road track 10, validity of the identification key(s) 16, 160, availability of power etc. Responsive to the processing of the information, the electrical road track 10 may be activated for transfer of power.

With reference to Fig. 11, method 200 for transferring power between a vehicle 20 and an electrical road track 10 is presented. The method 200 is preferably executed by means of a vehicle power adapter 100 as presented herein. Consequently the method 200 comprises obtaining 210 a vehicle power adaptor 100 according to any embodiment or example of the present disclosure. The method 200 further comprises connecting 220 the first interface 110 of the vehicle power adaptor 100 to the electrical road track 10 and the second interface 120 of the vehicle power adaptor 100 to the vehicle 20. The order of the connections is of little importance for the present disclosure, but in one embodiment, the first interface 110 is connected to the electrical road track 10 before the second interface 120 is connected to the vehicle 20 and in and alternative embodiment, the second interface 120 is connected to the vehicle 20 before the first interface 110 is connected to the electrical road track 10. The connecting 210 of the first interface 110 may comprise fastening the attachment means 115 as taught and exemplified elsewhere in the present disclosure. The method 230 further comprises activating 230 the electrical road track 10 and transferring 240 power between the vehicle 20 and the electrical road track 10.

With reference to Fig. 12, some optional features relating to the activation 230 of the electrical road track 10 will be given. In some embodiments, the activation 230 may further comprise obtaining 232 a road track identification key 16 as presented elsewhere in the present disclosure. The road track identification key 16 may be obtained through any means presented herein and will depend on the execution of the method 200. In a preferred embodiment, the road track identification key 16 is obtained by the system controller 4 via the vehicle power adaptor 100. The obtaining 232 preferably may further comprise obtaining 232 a user identification key 160 as presented elsewhere in the present disclosure. The user identification key 160 may be obtained through any means presented herein and will depend on the execution of the method 200. In a preferred embodiment, the user identification key 160 is obtained by the system controller 4 via the UE 3. A decision to activate, or not to activate, the electrical road track 10 may be based on the road track identification key 16 and/or the user identification key 160.

In one additional, or alternative, embodiment of the method 200, the activating 230 of the electrical road track 10 further comprises obtaining 234 one or more electricity metrics 6. The electricity metrics 6 may be one or more of an electricity pricing metric, an energy availability metric, an energy consumption metric, a state of charge of the vehicle or a time of day. A decision to activate or not to activate the electrical road track 10 may be based on the electricity metric(s). That is to say, if an energy consumption metric indicate that energy consumption (for a given geographic region) is above an upper threshold value, charging of the vehicle 20 may be prohibited. In such scenarios, the transferring of power 240 may be unidirectional such that only power transfer from the vehicle 20 to the electrical road track 10 is allowed and not the other way around. The vehicle to grid transfer of power may be gated by the state of charge of the vehicle 20. Further to this, if a more local energy consumption is considered, i.e. a series of electrical road tracks 10, the state of charge of the vehicles 20 may be used to determine which vehicles 20 that are allowed to be charged to avoid overloading the electrical connection form the grid to the electrical road tracks 10. Similar examples are applicable also for the other electricity metrics 6.

Execution of at least the activating 230 and/or the transferring 240 (in all their embodiments and examples) may be wholly, or in part, be caused by one or more of the system controller 4, the road track control module 14, the control module 140 or the second control module 124. Correspondingly, either the system controller 4, the road track control module 14, the control module 140 or the second control module 124 may be configured to execute at least parts of the activating 230 and/or the transferring 240 (in all their embodiments and examples).

In one specific embodiment, the electrical road track 10 comprises the road track identification key 16 coded in an RFID tag (data road track data interface 13) of the electrical road track 10. The vehicle power adaptor 100 comprises an RFID reader (first data interface 113) and when the first interface 110 of the vehicle power adaptor 100 engages the electrical road track 10, the road track identification key 16 is read by the vehicle power adaptor 100. The vehicle power adaptor 100 is connected by Bluetooth to a LTE 3 which determines if the vehicle power adaptor 100 is permitted to transfer power using the electrical road track 10.

Similarly, the electrical road track 10 comprises the road track identification key 16 coded in a barcode, QR code or similar (data road track data interface 13) attached to or presented in the vicinity of the of the electrical road track 10. A user of the vehicle power adaptor 100 scans the barcode using a LTE 3 which (using a local or remote application) associates the road track identification key 16 and determines if the user is permitted to transfer power using the electrical road track 10.

In some embodiments, the activation is in the form of a mechanical switch (not shown) of the electrical road track 10 that is triggered by the first interface 110 and or a key. This is a simple and cost effective means of activation wherein the holder of a vehicle power adaptor 100 configured to activate the electrical road track 10 is able to transfer power using the electrical road track 10. Similarly, if it is a keyed activation, any holder of the correct key would be permitted to transfer power using the electrical road track 10.

In some embodiments, the electrical road track 10 is activated in response to being engaged by attachment means 115 of a first interface 110. In embodiments comprising mechanical attachment means 115, this may be implemented by the attachment means 115 engaging switches of the electrical road track 10 when engaging the electrical road track 10. In embodiments with attachment means 115 comprising magnets (electromagnets or permanent magnets), the magnets may activate a reed switch or other electromechanical component of the electrical road track 10 and the reed switch may be configured to cause the activation of the electrical road track 10.

In some embodiments, the first interface 110 is configured to, when the vehicle power adapter 100 is in use, cover the electrical road track 10. In some embodiments, the first interface 110 is configured to, when the vehicle power adapter 100 is in use, cover at least the track power terminals 11, 12 of the electrical road track 10. These embodiments are beneficial as they further reduce a risk of electric shock when handling the vehicle power adaptor 100 or being in the vicinity of an (active) electrical road track 10.

It should be mentioned that the type of power transferred between the electrical road track 10 and the vehicle 20 is of little importance. The skilled person readily understands how to adapt the teachings of the present disclosure in order to provide a vehicle power adaptor 100 for transfer of DC power, a vehicle power adaptor 100 for transfer of AC power, a vehicle power adaptor 100 for transfer of AC and DC power or a vehicle power adaptor 100 for transfer of DC power or AC power depending on e.g. a configuration.

The present disclosure is, in an attempt to be brief, been focused on the conceptual idea of the vehicle power adaptor 100 in that an electrical road track 10 may be utilized to transfer power to and from a vehicle 20 without power collectors 25. This means that only a few examples of activation, attachment and control are provided and the skilled person will, based on the features presented, know how to implement a fully forking system comprising billing, user control, network load balancing etc.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference to vehicles 20 and road parking, persons skilled in the art will appreciate that the embodiments of the invention can equivalently be applied to any electrical device benefitting from charging and/or any electrical network benefitting from receiving power ad hoc. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A vehicle power adaptor (100), comprising a first interface (110) configured for connection to an electrical road track (10) and a second interface (120) configured for connection to a charging port (22) of a parked vehicle (20), wherein the first interface (110) is electrically connected to the second interface (120) and the vehicle power adaptor (100) is configured to, when in use, transfer power (P) between the electrical road track (10) and the charging port (22) of the parked vehicle (20).

2. The vehicle power adaptor (100) of claim 1, further comprising a control module (140) arranged between the first interface (110) and the second interface (120), and configured to control the transfer of power (P) between the first interface (110) and the second interface (120).

3. The vehicle power adaptor (100) of claim 2, wherein the control module (140) is configured to obtain a road track identification key (16) associated with the electrical road track (10).

4. The vehicle power adaptor (100) of any one of the preceding claims, further comprising a user identification key (160) associated with a user of the vehicle power adaptor (100).

5. The vehicle power adaptor (100) of any one of the preceding claims, further comprising a power source (150) configured to power the first interface (110), the second interface (120) and/or the control module (140) and optionally to, when the vehicle power adaptor (100) is used, receive power from the electrical road track (10) and/or the vehicle (20).

6. The vehicle power adaptor (100) of any one of the preceding claims, wherein the first interface (110) further comprises an attachments means (115) configured to retain the first interface (110) on the electrical road track (10), optionally the first interface (110) further comprises a lock (115L) configured to lock the attachments means (115) in engagement with the electrical road track (10).

7. The vehicle power adaptor (100) of any one of the preceding claims, further comprising a heating element (180) configured to heat the first interface (110).

8. The vehicle power adaptor (100) of any one of the preceding claims, wherein the first interface (110) comprises a first power interface (111, 112) configured for transfer of power between the vehicle power adaptor (100) and the electrical road track (10), and a first data interface (113) configured for transfer of data between the vehicle power adaptor (100) and the electrical road track (10).

9. The vehicle power adaptor (100) of any one of the preceding claims, wherein the first interface (110) comprises a galvanic connection (111, 112) for transfer of power between the vehicle power adaptor (100) and the electrical road track (10).

10. The vehicle power adaptor (100) of any one of the preceding claims, wherein the first interface (110) comprises an inductive connection (111, 112) and/or a capacitive connection (111, 112) for transfer of power between the vehicle power adaptor (100) and the electrical road track (10).

11. The vehicle power adaptor (100) of any one of the preceding claims, configured to unidirectionally transfer power from the electrical road track (10) to the vehicle (20).

12. A method (200) of transferring power between a vehicle (20) and an electrical road track (10), the method (200) comprising:
obtaining (210) a vehicle power adaptor (100) of any one of the preceding claims,
connecting (220) the first interface (110) of the vehicle power adaptor (100) to the electrical road track (10) and the second interface of the vehicle power adaptor (100) to a charging port (22) of the vehicle (20), activating (230) the electrical road track (10), and
transferring (240) power between the vehicle (20) and the electrical road track (10).

13. The method (200) of claim 12, wherein activating (230) the electrical road track (10) further comprises obtaining (232) a road track identification key (16) associated with the electrical road track (10) and a user identification key (160) associated with the vehicle power adaptor (100), and activating (230) the electrical road track (10) is based in the road track identification key (16) and the user identification key (160).

14. The method (200) of claim 12 or 13, wherein activating (230) the electrical road track (10) further comprises obtaining (234) electricity metrics (6), and activating (230) the electrical road track (10) is based on the electricity metrics (6), wherein the electricity metrics (6) comprises one or more of an electricity pricing metric, an energy availability metric, an energy consumption metric, a state of charge of the vehicle (20) or a time of day, preferably, the transferring (240) of power is either from the electrical road track (10) to the vehicle (20) or from the vehicle (20) to the electrical road track (10) based on the electricity metrics (6).

15. A vehicle charging system (1), comprising a vehicle power adaptor (100) of any one of claims 1 to 11, an electrical road track (10) and a system controller (4) operatively connected to the vehicle power adaptor (100) and the electrical road track (10) wherein the system controller (4) is configured to cause:
activation of the electrical road track (10), and
transfer of power between the vehicle (20) and the electrical road track (10).
